# EUROPEAN PATENT SPECIFICATION

(11) **EP 2 218 802 B1**
(45) Date of publication and mention of the grant of the patent: **22.06.2011**
(21) Application number: 10000827.5
(22) Date of filing: 27.01.2010
(51) Int. Cl.: C22C 38/42, B29C 33/38, C22C 38/44, C22C 38/46, C22C 38/20, C22C 38/22, C22C 38/24, C21D 6/00

(54) **Steel for mold for plastic molding and mold for plastic molding**
Stahl für eine Form zur Kunststoffformung und Form zur Kunststoffformung
Acier pour moule de moulage de plastique et moule pour moulage de plastique

(30) Priority: 29.01.2009 JP 2009017419
(43) Date of publication of application: 18.08.2010
(73) Proprietor: Daido Tokushuko Kabushiki Kaisha, Higashi-ku Nagoya Aichi (JP)
(72) Inventor: Ibuki, Motohiro, Aichi (JP); Inoue, Koichiro, Aichi (JP)
(74) Representative: Diehl & Partner GbR

(56) References cited:
- JP-A- 8 165 542
- JP-A- 2001 316 769
- JP-A- 2007 277 639
- US-A1- 2002 112 786
- US-A1- 2003 066 577
- US-A1- 2005 115 644
- US-A1- 2008 069 719

## Description

### FIELD OF THE INVENTION

The present invention relates to a steel for mold for plastic molding and to a mold for plastic molding.

### BACKGROUND OF THE INVENTION

Molded plastic articles are used in various fields in recent years. In general, molded plastic articles having desired shapes are molded using molds for plastic molding, such as, for example, molds for injection molding and molds for press molding.

Conventionally known steels for mold for plastic molding include steels of the precipitation hardening type and SUS steels.

JP-A-2-93043 discloses a tool steel for plastic molding, which contains, in terms of % by weight, 0.25 to 0.50% of C, 0.005 to 0.5% of Si, 0.1 to 2.0% of Mn, 8.0 to 10.0% of Cr, 0.05 to 2.0% of Mo, 0.005 to 0.050% of acid-soluble Al, and 0.002 to 0.035% of total nitrogen; and further contains at least two of 0.01 to 0.50% of V, 0.005 to 0.25% of Nb, and 0.01 to 0.25% of W, with the remainder being Fe and unavoidable impurities.

JP-A-4-116139 discloses a steel for mold for plastic molding, which contains, in terms of % by weight, 0.30 to 0.55% of C, 0.01 to 1.0% of Si, 0.1 to 3.0% of Mn, 7 to 12% of Cr, 0.05 to 3.0% of Mo, 0.005 to 0.10% of sol. Al, and 0.002 to 0.05% of TN; further contains at least two of 0.01 to 0.50% of V, 0.005 to 0.50% ofNb, and 0.01 to 0.50% of W; and further contains at least one of 0.01 to 0.15% of S, 0.01 to 0.10% of Pb, and 0.005 to 0.20% of Te. US 2003/0066577 discloses a tool steel for use in dies for moulding plastics with differing amounts of carbon and chronium.

In recent plastic molding, mold temperature is frequently regulated according to molding timing from the standpoints of the quality improvement, productivity, etc. of molded articles.

For example, a part of a mold which corresponds to a weldline generation area is heated for the purpose of, for example, enhancing the flowability of a molding resin to inhibit weldline generation and improve surface quality. On the other hand, a mold is cooled for the purpose of, for example, shortening the time period required for cooling the molding resin to improve productivity.

For conducting the mold temperature regulation, it is desirable to use a steel having excellent thermal conductivity. However, the above-mentioned steels of the precipitation hardening type have been reduced in the content of chromium, which is effective in corrosion resistance, from the standpoint of ensuring processability. Therefore, the mold is apt to rust in the heating hole and cooling hole through which a heating medium and a cooling medium are circulated, and this rusting is apt to result in a decrease in thermal conductivity. On the other hand, the SUS steels, in the first place, have poor thermal conductivity, although these steels have excellent corrosion resistance and hence hardly rust.

Furthermore, in the case where a rigid resin is used as a molding resin, use of a mold having insufficient hardness results in mold marring due to contact with the molded articles being taken out or because of molding flash generation (molding flash generated being sandwiched between the surfaces of the mold), etc., leading to a decrease in mold life.

As described above, recent steels for mold for plastic molding have been required to be excellent in thermal conductivity, corrosion resistance, and hardness. However, there has been no steel which sufficiently meets all requirements.

### SUMMARY OF THE INVENTION

Accordingly, an object of the invention is to provide a steel for mold for plastic molding which is excellent in the balance among thermal conductivity, corrosion resistance, and hardness in comparison with conventional steels.

Namely, the present invention relates to the steel and mould as given in the claims.

Owing to the chemical composition employed therein, the steel for mold for plastic molding according to the invention is excellent in the balance among thermal conductivity, corrosion resistance, and hardness in comparison with conventional steels.

When the contents of Cr and Mo of the steel satisfies 7 ≤ Cr+3.3Mo, sufficient corrosion resistance is obtained.

When the steel further contains at least one element selected from sulfur, selenium, tellurium, calcium, lead and bismuth in a specific amount(s), this steel can have improved machinability while being inhibited from decreasing in toughness. This steel hence has excellent processability in mold production.

When the steel of the invention further contains at least one element selected from tantalum, titanium and zirconium in a specific amount(s), the element(s) is/are apt to combine with carbon and nitrogen to form carbonitrides, so that crystal grain coarsening is inhibited. Consequently, strength enhancement is easy, and this steel further has excellent mirror surface properties.

The mold for plastic molding according to the invention is produced using, as a material, the steel for mold for plastic molding described above. This mold hence is excellent in suitability for mold temperature regulation, resistance to corrosion by heating/cooling media, e.g., water, and mold strength. In addition, owing to these properties, this mold further has an excellent mold life.

### BRIEF DESCRIPTION OF THE DRAWINGS

Fig. 1 is a presentation showing the relationship between the value of Cr+3.3Mo and the area ratio of rusting.
Fig. 2 is a presentation showing the relationship between the value of 0.1×x(10×Si)²+5×Ni+Cr+Mo and the coefficient of thermal conductivity (coefficient of thermal conductivity of comparative steel 2 being taken as 100).

### BEST MODE FOR CARRYING OUT THE INVENTION

A steel for mold for plastic molding (hereinafter sometimes referred to as "present steel") and a mold for plastic molding (hereinafter sometimes referred to as "present mold") in accordance with an embodiment of the invention are explained below in detail.

### 1. Present steel

The present steel consisting essentially of the following elements, with the remainder being iron and unavoidable impurities. The kinds and proportions of the additive elements, reasons for limitation, etc. are as follows. The unit of the proportions is % by weight.

### C: 0.22% to 0.35%

Carbon is an element necessary for ensuring strength and wear resistance. Carbon combines with carbide-forming elements such as chromium, molybdenum, tungsten, and vanadium to form carbides, and further forms carbonitrides with chromium, molybdenum, tungsten, or vanadium in cooperation with nitrogen. Carbon, during quench-hardening, forms a solid solution in the matrix phase and thereby forms martensite structure. Carbon is therefore necessary also for ensuring hardness. From the standpoint of obtaining these effects, the lower limit of carbon content is 0.22%. The lower limit of carbon content is preferably 0.26%.

In case where the content of carbon is excessively high, the carbide-forming elements combine with the carbon to form carbides containing chromium and molybdenum. As a result, the amount of the chromium and molybdenum which are present in the form of a solid solution in the matrix is reduced, resulting in reduced corrosion resistance. Consequently, the upper limit of carbon content is 0.35%. The upper limit of the carbon content is preferably 0.30%.

### Si: 0.01% to 0.40%

Silicon is added mainly as a deoxidizer or an element which improves machinability necessary for mold production. From the standpoint of obtaining these effects, the lower limit of silicon content is 0.01 %. The lower limit of silicon content is preferably 0.10%, more preferably 0.20%.

In case where the content of silicon is excessively high, thermal conductivity decreases. From the standpoint of preventing this problem, the upper limit of silicon content is 0.40%. The upper limit of silicon content is preferably 0.30%.

### Mn: 0.10% to 1.20%

Manganese is added in order to improve suitability for quench-hardening or stabilize austenite. When sulfur has unavoidably come into the steel, manganese is effective in inhibiting toughness from being reduced. From the standpoint of obtaining these effects, the lower limit of manganese content is 0.10%.

In case where the content of manganese is excessively high, hot workability decreases. From the standpoint of preventing this problem, the upper limit of manganese content is 1.20%.

### P: up to 0.030%

Phosphorus is unavoidably contained in the steel. Phosphorus segregates at grain boundaries to cause a decrease in toughness. Consequently, the upper limit of phosphorus content is 0.030%.

### Cu: 0.05% to 0.20%

Copper is an element which stabilizes austenite. From the standpoint of obtaining this effect, the lower limit of copper content is 0.05%.

In case where the content of copper is excessively high, hot workability decreases. From the standpoint of preventing this problem, the upper limit of copper content is 0.20%.

### Ni: 0.05% to 1.00%

Nickel is an austenite-forming element. From the standpoint of obtaining this effect, the lower limit of nickel content is 0.05%.

In case where the content of nickel is excessively high, suitability for annealing decreases, making it difficult to regulate hardness. From the standpoint of preventing this problem, the upper limit of nickel content is 1.00%. The upper limit of nickel content is preferably 0.50%, more preferably 0.20%.

### Cr: 5.0% to 10.0%

Chromium is an element which improves corrosion resistance. From the standpoint of obtaining this effect, the lower limit of chromium content is 5.0%. The lower limit of chromium content is preferably 7%.

In case where the content of chromium is excessively high, thermal conductivity and toughness decrease. From the standpoint of preventing this problem, the upper limit of chromium content is 10.0%. The upper limit of chromium content is preferably 9%.

### Mo: 0.10% to 1.00%

Molybdenum is an element which improves corrosion resistance. Furthermore, molybdenum combines with carbon to thereby contribute to the secondary hardening of the material. From the standpoint of obtaining these effects, the lower limit of molybdenum content is 0.10%.

In case where the content of molybdenum is excessively high, carbides are apt to crystallize, resulting in decreases in impact value and mirror surface properties. From the standpoint of preventing this problem, the upper limit of molybdenum content is 1.00%. The upper limit of molybdenum content is preferably 0.60%.

### V: more than 0.50% but 0.80% or less

Vanadium combines with carbon and nitrogen to form a carbonitride. This carbonitride contributes to the inhibition of crystal grain coarsening during quench-hardening. From the standpoint of obtaining this effect, the lower limit of vanadium content is above 0.50%. The lower limit of vanadium content is preferably 0.55%.

In case where the content of vanadium is excessively high, the growth of coarse carbonitrides is accelerated, resulting in carbonitride particles having an increased diameter and hence in reduced mirror surface properties. From the standpoint of preventing this problem, the upper limit of vanadium content is 0.80%. The upper limit of vanadium content is preferably 0.70%.

### N: 0.01% to 0.2%

Nitrogen is an interstitial element and contributes to an improvement in the hardness of martensitic structure. Compared to carbon, which also is an interstitial element, nitrogen has higher γ-stabilizing ability. Furthermore, nitrogen in a solid-solution state contributes to an improvement in corrosion resistance. Moreover, nitrogen combines with carbon and vanadium to form a carbonitride. This carbonitride inhibits crystal grains from coarsening during quench-hardening. From the standpoint of obtaining these effects, the lower limit of nitrogen content of 0.01%.

In case where the content of nitrogen is excessively high, the growth of coarse carbonitrides is accelerated, resulting in carbonitride particles having an increased diameter and hence in reduced mirror surface properties. From the standpoint of preventing this problem, the upper limit of nitrogen content is 0.2%.

### O: up to 0.0100%

Oxygen is an element unavoidably contained in the molten steel. However, in case where oxygen is contained in an excessively large amount, the oxygen combines with silicon and aluminum to generate coarse oxides, and these oxides as inclusion reduce toughness and mirror surface properties. From the standpoint of preventing this problem, the upper limit of oxygen content is 0.0100%.

### Al: up to 0.050%

Aluminum is an element added as a deoxidizer. However, in case where the content of aluminum is excessively high, a coarse nitride is apt to generate to reduce mirror surface properties. From the standpoint of preventing this problem, the upper limit of aluminum content is 0.050%. The upper limit of aluminum content is preferably 0.020%.

The present steel may further contain any desired one or more elements selected from the following elements, besides the essential elements described above. The proportion of each element, reasons for limitation, etc. are as follows.

S: 0.001 to 0.20%;
Se: 0.001 to 0.3%;
Te: 0.001 to 0.3%;
Ca: 0.0002 to 0.10%;
Pb: 0.001 to 0.20%; and
Bi: 0.001 to 0.30%
Sulfur, selenium, tellurium, calcium, lead, and bismuth each can be added in order to improve machinability. From the standpoint of obtaining this effect, the lower limit of sulfur content is 0.001 %. For the same reason, the lower limit of selenium content is 0.001 %. The lower limit of tellurium content is 0.001 %. The lower limit of calcium content is 0.0002%. The lower limit of lead content is 0.001 %. The lower limit of bismuth content is 0.001%.

In case where the content of each of sulfur, selenium, tellurium, calcium, lead, and bismuth is excessively high, this results in a decrease in toughness. From the standpoint of preventing this problem, the upper limit of sulfur content is 0.20%. For the same reason, the upper content of selenium content is 0.3%. The upper limit of tellurium content is 0.3%. The upper limit of calcium content is 0.10%. The upper limit of lead content is 0.20%. The upper limit of bismuth content is 0.30%.

Ta: 0.001 to 0.30%;
Ti: up to 0.20%; and
Zr: 0.001 to 0.30%
Tantalum, titanium, and zirconium combine with carbon and nitrogen to form carbonitrides and thereby inhibit crystal grains from coarsening. The three elements hence are effective in improving mirror surface properties. From the standpoint of obtaining this effect, the lower limit of tantalum content is 0.001%. For the same reason, the lower limit of zirconium content is 0.001%. With respect to the content of titanium, there is no particular lower limit thereon.

In case where the content of each of tantalum, titanium, and zirconium is excessively high, this results in a decrease in machinability. From the standpoint of preventing this problem, the upper limit of tantalum content is 0.30%. For the same reason, the upper limit of titanium content is 0.20%. The upper limit of zirconium content is 0.30%.

In this regard, with regard to each element contained in the present steel, according to an embodiment, the minimal amount thereof present in the steel is the smallest non-zero amount used in the Examples of the developed steels as summarized in Table 1. According to a further embodiment, the maximum amount thereof present in the steel is the maximum amount used in the Examples of the developed steels as summarized in Table 1.

It is preferred that the contents (in terms of % by weight) of Cr and Mo of the present steel satisfy the requirement 7 ≤ Cr+3.3Mo. This is because the steel satisfying that requirement can exhibit sufficient resistance to corrosion by a heating medium and cooling medium circulated through a heating hole and cooling hole which are to be formed in molds for the purpose of mold temperature regulation. That requirement can be determined by measuring the pitting potential in accordance with JIS G 0577 and rearranging the results with the effects of the elements.

The addition of alloying elements basically reduces thermal conductivity and is hence apt to be causative of a decrease in suitability for mold temperature regulation. Samples were produced while changing the addition amounts of component elements and the degrees of thermal conductivity thereof were determined to examine the influence of the addition amount of each component element on the degree of thermal conductivity. As a result, it was found, for example, that silicon and nickel are elements which exert a considerable influence on thermal conductivity and that chromium and molybdenum also reduce thermal conductivity when added excessively, although the latter two elements are essential for improving the mold resistance to corrosion by heating/cooling media. Regression of the results of the examination gives the requirement 0.1×(10×Si)²+5×Ni+Cr+Mo≤15. It is preferred that the contents (in terms of % by weight) of Si, Ni, Cr and Mo of the present steel satisfy the requirement, because the steel satisfying that requirement can exhibit satisfactory thermal conductivity.

The degree of thermal conductivity λ can be determined by determining the specific heat Cp and thermal diffusivity α of a sample by the laser flash method and calculating the degree of thermal conductivity from the measured values of those properties and from a value of density p determined separately, in the following manner.

A surface of a sample (sample weight: M, sample thickness: L) is irradiated with a laser light to give thermal energy Q thereto, and the resultant temperature change ΔT of the back side of the sample is measured with a thermocouple. The specific heat Cp of the sample is calculated using Cp = Q/(M×ΔT) [J/(kg·K)]. Furthermore, the time period (tl/2) required for the sample temperature to reach a half of the maximum value of the temperature change of the sample is measured with an infrared detector disposed on the front side of the sample. The thermal diffusivity α of the sample is calculated using α = 0.1388×L²/(t1/2) [m²/s]. From these values, the degree of thermal conductivity λ of the sample can be calculated using λ = Cp×α×ρ [W/(m·K)].

The chemical components of the present steel are as described above. The hardness of the present steel, in terms of the hardness of the steel being used as a final mold, is preferably 49 HRC or higher, more preferably 53 HRC or higher, although the hardness thereof depends on the heat treatment condition.

The present steel described above can be suitably produced, for example, in the following manner. First, a steel having the chemical composition described above is produced as a melt with a vacuum induction furnace or the like, and this melt is cast to obtain an ingot.

Subsequently, the ingot obtained is subjected to hot forging and/or hot rolling to obtain a steel material having necessary dimensions.

After the hot working, the steel material is then subjected to one or more heat treatments according to need. Examples of the heat treatments include quench-and-temper, sub-zero treatment, and spheroidizing annealing.

Examples of the quench-and-temper include the following method. A steel material is heated, for example, at 1,000 to 1,200°C for 0.5 to 1.5 hours, and subsequently rapidly cooled to conduct quench-hardening. Thereafter, the steel material is subjected, according to need, to a sub-zero treatment, for example, at -196°C or -76°C for 0.5 to 1 hour. This steel material is thereafter heated at 200 to 700°C for 0.5 to 1.5 hours and then cooled with air to conduct tempering.

Examples of the spheroidizing annealing include a method in which a steel material is heated, for example, at 850 to 900°C for 3 to 5 hours, subsequently cooled in the furnace to around 600°C at a rate of 10 to 20 °C/hr, and then cooled with air.

### 2. Present Mold

The present mold is a mold produced using, as a material, the present steel described above.

From the standpoint of wear resistance, mirror surface properties, etc., it is preferred that the present mold have a hardness in the range of 49-53 HRC. The hardness of the present mold means the hardness of the mold material (base material) itself, and is determined through an examination of part which has undergone neither work hardening by cold working nor the influence of any of various surface treatments.

### Examples

The invention will be explained below in detail by reference to Examples.
Each of steels respectively having the chemical compositions (% by weight) shown in Table 1 was produced as a melt with a vacuum induction furnace and then cast to obtain a 50-kg ingot.

The ingot obtained by casting was hot-forged to produce a bar material having a size of 60 mm square. Thereafter, the bar material was annealed by holding at 900°C for 4 hours and subsequent cooling to 700°C under the conditions of 15 °C/hr, in order to ensure the processability required for the production of various test pieces.

Subsequently, various test pieces were cut out of the annealed bar material and subjected to the following tests concerning thermal conductivity (coefficient of thermal conductivity and cycle time characteristics), corrosion resistance, hardness, impact resistance, and mirror surface properties. The test pieces to be subjected to the tests concerning thermal conductivity, corrosion resistance, impact resistance, and mirror surface properties were quench-hardened (holding at 1,000 to 1,100°C for 1 hour), tempered (treatment in which the material was held at 150 to 600°C for 1 hour and then cooled to room temperature was conducted twice), and then precisely processed. The results concerning impact resistance and mirror surface properties are reference data.

### <Thermal Conductivity>

The coefficient of thermal conductivity was determined by the laser flash method described above. The values of the coefficient of thermal conductivity shown in Table 2 given later are values relative to the coefficient of thermal conductivity of comparative steel 2, which is taken as 100.
Furthermore, test pieces having a water-cooling hole (diameter: 8 mm) were produced, and water was passed through the water-cooling hole (water temperature: 40°C, flow rate: 3.5 L/min). After the water passing, a surface of each test piece was heated to 300°C with a high-frequency heating coil, and the time period required for the surface to cool to 100°C was measured. In Table 2, data obtained after 1-day water passing and data obtained after 30-day water passing are given.

### <Corrosion Resistance>

Test pieces having a through-hole (diameter: 8 mm) formed therein were produced, and water was passed through the through-hole (water temperature: 40°C, flow rate: 3.5 L/min, 24 hours). Thereafter, photographs of a section of each test piece were taken, and the area ratio of rusting (%) was determined by image analysis.

### <Hardness>

A cubic block having a side length of 10 mm was cut out of the bar material, and the surface to be examined and the bottom surface were polished to #400. Thereafter, this block was examined for hardness with a Rockwell C scale.

### <Impact Resistance>

A sample of a size sufficient to obtain a JIS No. 3 test piece therefrom was cut out of the bar material and subjected to the heat treatment described above. Thereafter, the sample was precisely processed to produce a JIS No. 3 test piece, which was subjected to a Charpy impact test.

### <Mirror Surface Property>

The bar material was processed into a plate material having dimensions of 50 mm × 45 mm × 12 mm, and this plate material was subjected to the heat treatment described above. Thereafter, the plate material was polished to #8000 by mechanical polishing to produce a test piece. The test piece obtained was examined for surface roughness Ry in accordance with JIS B0633.

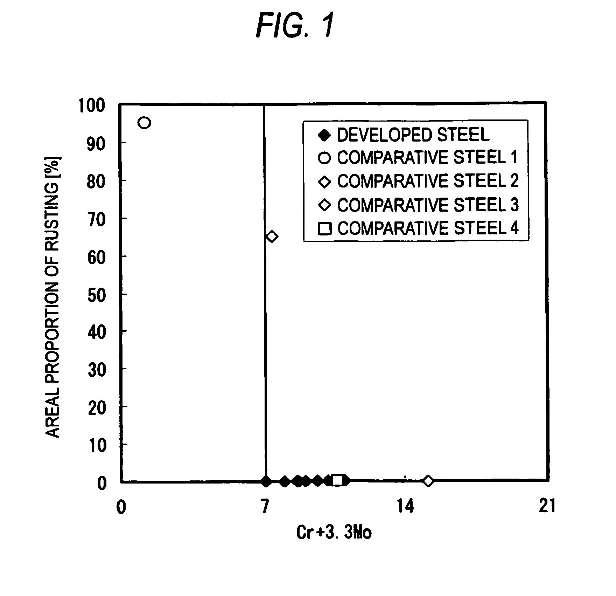

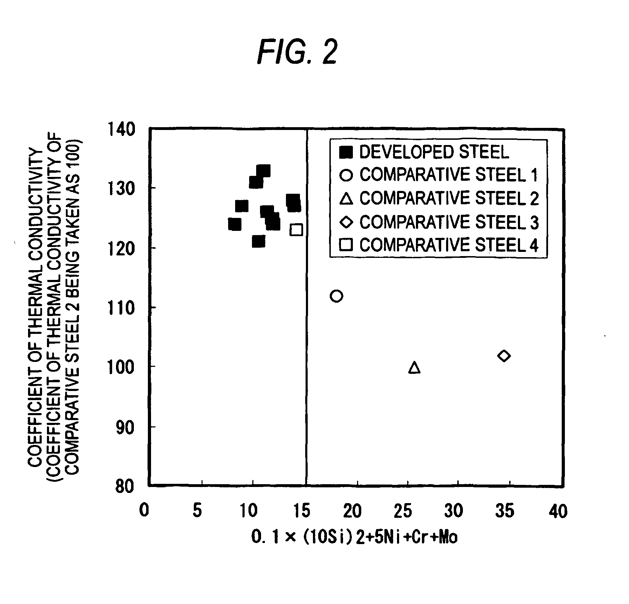

In Table 1 are shown the chemical compositions of developed steels and comparative steels. In Table 2 are shown the results of the tests. In Fig. 1 is shown the relationship between the value of Cr+3.3Mo and the area ratio of rusting. In Fig. 2 is shown the relationship between the value of 0.1 ×(10×Si)²+5×Ni+Cr+Mo and the coefficient of thermal conductivity (coefficient of thermal conductivity of comparative steel 2 being taken as 100).

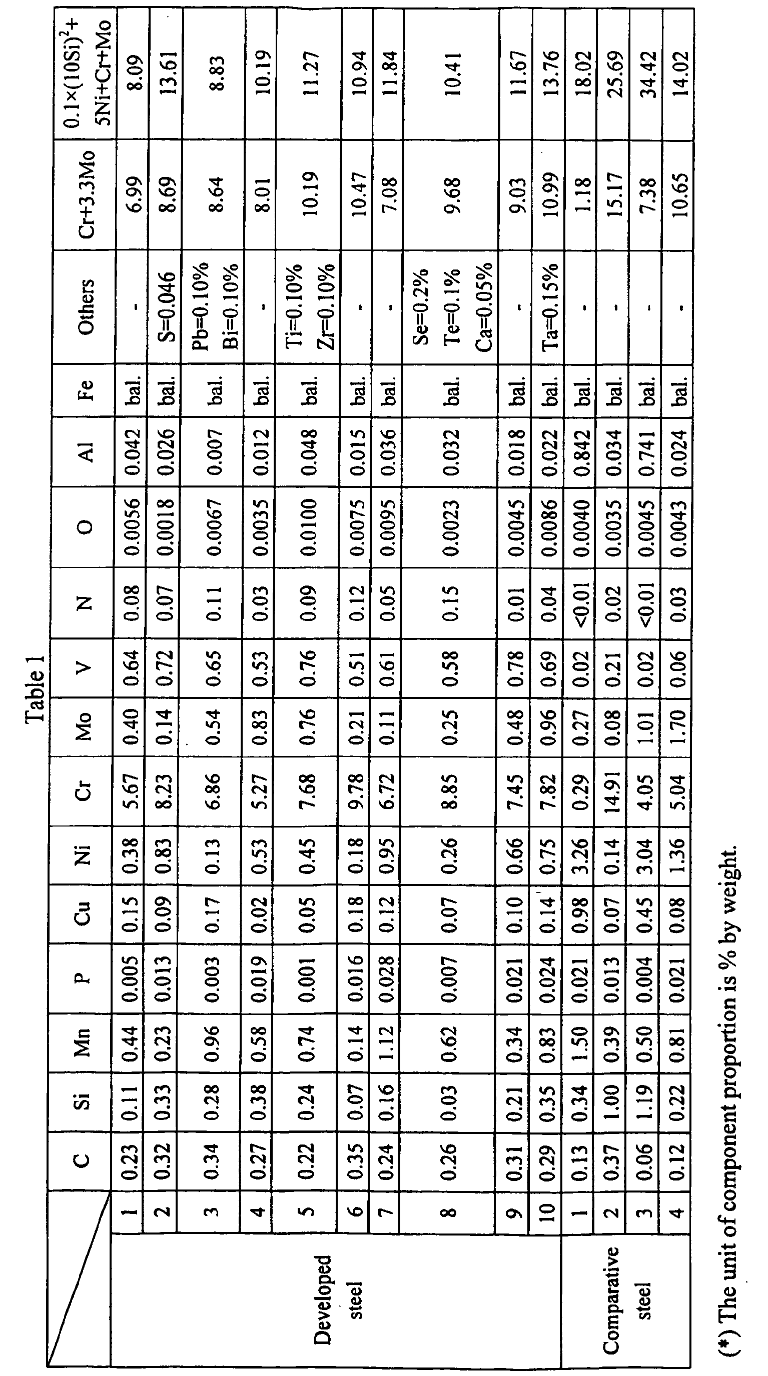

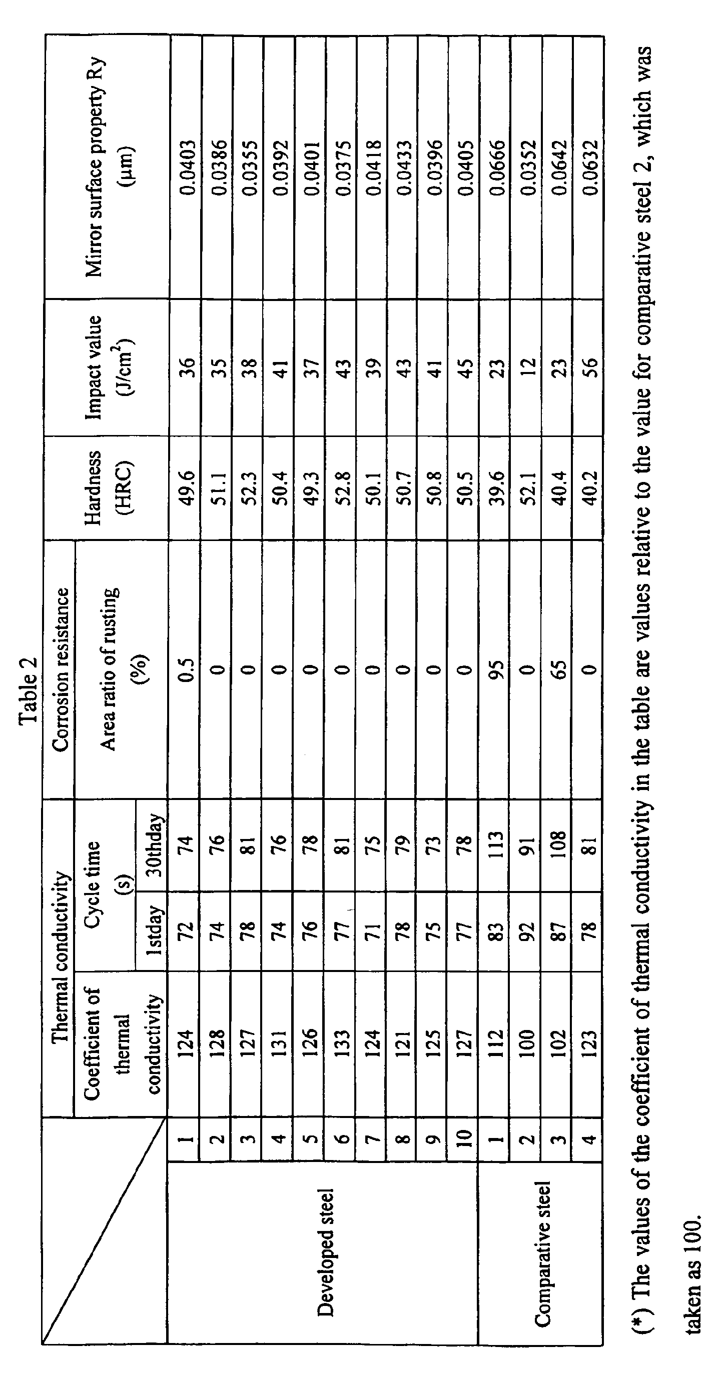

The following can be seen from comparisons between Table 1 and Table 2 and between Fig. 1 and Fig. 2. Comparative steel 1 has a carbon content and a chromium content which are lower than the lower limits of the ranges specified in the invention. Because of this, comparative steel 1 is low in hardness and impact value and has poor corrosion resistance.

Comparative steel 2 has a chromium content higher than the upper limit of the range specified in the invention. Because of this, comparative steel 2 is low in the coefficient of thermal conductivity and impact value although excellent in corrosion resistance.

Comparative steel 3 has a carbon content and a chromium content which are lower than the lower limits of the ranges specified in the invention. This steel further has a silicon content and a nickel content which are higher than the upper limits of the ranges specified in the invention. Because of this, comparative steel 3 is low in hardness, coefficient of thermal conductivity, and impact value and has insufficient corrosion resistance.

Comparative steel 4 has a carbon content lower than the lower limit of the range specified in the invention. Because of this, comparative steel 4 is low in hardness.

In contrast to those comparative steels, the developed steels each have an excellent balance among thermal conductivity, corrosion resistance, and hardness. It can be seen from Fig. 1 that sufficient corrosion resistance is apt to be obtained when the chemical composition and the requirement 7 ≤ Cr+3.3Mo are satisfied. Consequently, developed steel 1, which does not satisfy the requirement 7 ≤ Cr+3.3Mo, has slightly poor corrosion resistance. It can be seen from Fig. 2 that satisfactory thermal conductivity is apt to be exhibited when the chemical composition and the requirement 0.1×(10×Si)²+5×Ni+Cr+Mo ≤ 15 are satisfied.

It was able to be ascertained from those results that when the developed steels are used as materials for mold for plastic molding, plastic-molding molds excellent in suitability for temperature regulation, resistance to corrosion by heating/cooling media, e.g., water, and strength are obtained.

Embodiments and Examples of the invention have been explained above. The invention should not be construed as being limited to those embodiments or Examples, and various modifications can be made therein.

## Claims

1. A steel for mold for plastic moulding, the steel comprising, in terms of % by weight,
C: 0.22% to 0.35%,
Si: 0.01% to 0.40%,
Mn: 0.10% to 1.20%,
P: up to 0.030%,
Cu: 0.05% to 0.20%,
Ni: 0.05% to 1.00%,
Cr: 5.0% to 10.0%,
Mo: 0.10% to 1.00%,
V: more that 0.50% but 0.80% or less,
N: 0.01% to 0.2%,
O: up to 0.0100%, and
Al: up to 0.050%,
and optionally comprising
0.001% to 0.20% S,
0.001% to 0.3% Se,
0.001% to 0.3% Te,
0.0002% to 0.10% Ca,
0.001% to 0.20% Pb,
0.001% to 0.30% Bi,
0.001% to 0.30% Ta,
up to 0.20% Ti, and
0.001% to 0.30% Zr,
with the remainder being Fe and unavoidable impurities.

2. The steel according to claim 1, wherein the contents of Cr and Mo satisfies 7 ≤ Cr+3.3Mo.

3. A mold for plastic moulding produced using a steel according to claim 1 or 2 as a material.

## Patentansprüche

1. Stahl für ein Formwerkzeug für die Kunststoff-Formgebung, wobei der Stahl in Gewichts-% das Folgende umfasst:
C: 0,22 % bis 0,35 %,
Si: 0,01 % bis 0,40 %,
Mn: 0,10 % bis 1,20 %,
P: bis zu 0,030 %,
Cu: 0,05 % bis 0,20 %,
Ni: 0,05 % bis 1,00 %,
Cr: 5,0 % bis 10,0 %,
Mo: 0,10 % bis 1,00 %,
V: mehr als 0,50 %, jedoch 0,80 % oder weniger,
N: 0,01 % bis 0,2 %,
O: bis zu 0,100 % und
Al: bis zu 0,050 %,
und gegebenenfalls das Folgende umfasst:
0,001 % bis 0,20 % S,
0,001 % bis 0,3 % Se,
0,001 % bis 0,3 % Te,
0,0002 % bis 0,10 % Ca,
0,001 % bis 0,20 % Pb,
0,001 % bis 0,30 % Bi,
0,001 % bis 0,30 % Ta,
bis zu 0,20 % Ti und
0,001 % bis 0,30 % Zr,
wobei es sich bei dem Rest um Fe und unvermeidbare Verunreinigungen handelt.

2. Stahl gemäß Anspruch 1, wobei die Gehalte an Cr und Mo die Bedingung 7 ≤ Cr + 3,3 Mo erfüllen.

3. Formwerkzeug für die Kunststoff-Formgebung, welches unter Verwendung eines Stahls gemäß Anspruch 1 oder 2 als Material hergestellt wird.

## Revendications

1. Acier pour moule pour le moulage de plastique, l'acier comprenant, exprimé en pourcentage pondéral :
C : 0,22 % à 0,35 %,
Si : 0,01 % à 0,40 %,
Mn : 0,10 % à 1,20 %,
P : jusqu'à 0,030 %,
Cu : 0,05 % à 0,20 %,
Ni : 0,05 % à 1,00 %,
Cr : 5,0 % à 10,0 %,
Mo : 0,10 % à 1,00 %,
V : >0,50 % mais ≤0,80 %,
N : 0,01 % à 0,2 %,
O : jusqu'à 0,0100 %, et
Al : jusqu'à 0,050 %,
et comprenant facultativement
0,001 % à 0,20 % S
0,001 % à 0,3 % Se
0,001 % à 0,3 % Te
0,0002 % à 0,10 % Ca
0,001 % à 0,20 % Pb
0,001 % à 0,30 % Bi
0,001 % à 0,30 % Ta
jusqu'à 0,20 % Ti, et
0,001 % à 0,30 % Zr
le complément étant apporté par Fe et des impuretés inévitables.

2. Acier selon la revendication 1, dans lequel les teneurs en Cr et Mo satisfont à la relation 7 ≤ Cr + 3,3 Mo.

3. Moule pour le moulage de plastique produit en utilisant un acier selon la revendication 1 ou 2 comme matériau.
